# EUROPEAN PATENT APPLICATION

(11) **EP 3 002 679 A1**
(43) Date of publication of application: **06.04.2016**
(21) Application number: 15182755.7
(22) Date of filing: 27.08.2015
(51) Int. Cl.: G06F 9/445

(54) **SOFTWARE AIRCRAFT PART INSTALLATION SYSTEM**

(30) Priority: 02.10.2014 US 201414504482
(71) Applicant: The Boeing Company, Chicago, IL 60606-2016 (US)
(72) Inventor: MITCHELL, James Edward, Chicago, IL 60606-2016 (US)
(74) Representative: Cabinet Plasseraud

(57) **Abstract**

A method and apparatus for installing a software aircraft part in an aircraft. A command to install the software aircraft part is received (118, 800). A determination is made as to whether the software aircraft part is present in the aircraft (804). A third party verifies that the software aircraft part is to be installed when the software aircraft part is present in the aircraft (806). The third party is in a location remote to the aircraft (116). An installation of the software aircraft part in the aircraft is performed (810) when the software aircraft part is present in the aircraft and the software aircraft part is verified for the installation (808). The aircraft operates with the software aircraft part installed in the aircraft.

## Description

### BACKGROUND

The present disclosure relates generally to aircraft and, in particular, to parts of an aircraft. Still more particularly, the present disclosure relates to a method and apparatus for installing software aircraft parts in an aircraft.

Modern aircraft are extremely complex. For example, an aircraft may have many types of electronic systems on board. A particular electronic system on an aircraft also may be referred to as a line replaceable unit (LRU). A line replaceable unit may take on various forms. A line replaceable unit may be, for example, without limitation, a flight management system, an autopilot, an in-flight entertainment system, a communication system, a navigation system, a flight controller, and a flight recorder.

A line replaceable unit may use software or programming to provide logic or control for various operations and functions. The software and other information used in a line replaceable unit are commonly treated as parts in the airline industry. For example, a software application for use in the line replaceable unit on an aircraft may be tracked separately from the line replaceable unit and referred to as a loadable software aircraft part (LSAP) or as a software aircraft part (SAP).

Software aircraft parts may be loaded into a line replaceable unit as part of the delivery of the aircraft from the manufacturer or as part of a maintenance operation. Software aircraft parts may be loaded by various techniques. For example, computer readable media, such as a floppy disk, a flash memory drive, or a digital versatile disk (DVD) may be taken to the aircraft and loaded into the computing or avionics system for the aircraft.

Other techniques may involve transmitting the software aircraft part to the computing system through a communications link established between the computing system and the source of the software aircraft part. In yet other examples, a portable data processing system, such as a laptop, may be carried to the aircraft to transfer the software aircraft part.

Different aircraft may require different software aircraft parts. For example, different types of aircraft may require different software aircraft parts. As another example, specific aircraft of the same type also may require different software aircraft parts. For example, a particular commercial aircraft may have different versions including various parts from different manufacturers. With this example, one version of this aircraft may use General Electric engines while another version of the aircraft may use Rolls Royce engines. A software aircraft part designed for a line replaceable unit used to control parameters for engines, such as thrust settings, may be different for these different versions of the particular commercial aircraft. As a result, software aircraft parts may be specific for a particular aircraft even within the same type or model.

Currently, operators verify that a software aircraft part is appropriate for a particular target aircraft based on an operator checking documents about the software aircraft part to ensure that the target aircraft is an appropriate aircraft for the software aircraft part. Once the appropriate software aircraft part has been identified for a target aircraft, the software aircraft part may be placed on a media for transport to the aircraft. The media may be on a maintenance laptop that is carried by a maintenance operator to the aircraft.

While in the aircraft, the maintenance operator verifies that the part is the correct part for the aircraft and installs the software aircraft part after verifying that the part is the correct one for the aircraft. This type of process is cumbersome and requires careful checking of software aircraft parts to ensure that the proper software aircraft part reaches the appropriate target aircraft.

Therefore, it would be desirable to have a method and apparatus that take into account at least some of the issues discussed above, as well as other possible issues.

### SUMMARY

In one illustrative embodiment, a method for installing a software aircraft part in an aircraft is presented. A command to install the software aircraft part is received. A determination is made as to whether the software aircraft part is present in the aircraft. A third party verifies that the software aircraft part is to be installed when the software aircraft part is present in the aircraft. The third party is in a location remote to the aircraft. An installation of the software aircraft part in the aircraft is performed when the software aircraft part is present in the aircraft and the software aircraft part is verified for the installation. The aircraft operates with the software aircraft part installed in the aircraft.

In another illustrative embodiment, another method for installing a software aircraft part in an aircraft is presented. The software aircraft part is sent to the aircraft. A command is sent to the aircraft to install the software aircraft part. A request is received from the aircraft to verify an installation of the software aircraft part. A determination is made as to whether the software aircraft part should be installed based on the request. A confirmation that the software aircraft part should be installed when the installation of the software aircraft part is verified is sent. The software aircraft part is installed on the aircraft when the confirmation is received by the aircraft.

In yet another illustrative embodiment, an apparatus comprises a part installer that receives a command to install a software aircraft part. The part installer determines whether the software aircraft part is present in an aircraft. The part installer also verifies with a third party that the software aircraft part is to be installed when the software aircraft part is present in the aircraft in which the third party is in a location remote to the aircraft. The part installer also installs the software aircraft part in the aircraft when the software aircraft part is present in the aircraft and the software aircraft part is verified for installation. The aircraft operates with the software aircraft part installed in the aircraft.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use and features thereof, will best be understood by reference to the following detailed description of an illustrative embodiment of the present disclosure when read in conjunction with the accompanying drawings, wherein:
**Figure 1** is an illustration of a block diagram of a software aircraft part installation environment in accordance with an illustrative embodiment;
**Figure 2** is an illustration of message flow between a part installer and a third party for installing a software part in accordance with an illustrative embodiment;
**Figure 3** is an illustration of a command in the form of a block diagram in accordance with an illustrative embodiment;
**Figure 4** is an illustration of a verification message in the form of a block diagram in accordance with an illustrative embodiment;
**Figure 5** is an illustration of a response in the form of a block diagram in accordance with an illustrative embodiment;
**Figure 6** is an illustration of a confirmation message sent by a part installer after installing a software aircraft part in the form of a block diagram in accordance with an illustrative embodiment;
**Figure 7** is an illustration of metadata generated from an installation of a software aircraft part in the form of a block diagram in accordance with an illustrative embodiment;
**Figure 8** is an illustration of a flowchart of a process for installing a software aircraft part in accordance with an illustrative embodiment;
**Figure 9** is an illustration of a flowchart of a process for installing a software aircraft part in accordance with an illustrative embodiment;
**Figure 10** is an illustration of a flowchart of a verification process in accordance with an illustrative embodiment;
**Figure 11** is an illustration of a flowchart of a process for proposing installation of a software aircraft part in accordance with an illustrative embodiment;
**Figure 12** is an illustration of a flowchart of a process for installing a software aircraft part in accordance with an illustrative embodiment; and
**Figure 13** is an illustration of a data processing system in the form of a block diagram in accordance with an illustrative embodiment.

### DETAILED DESCRIPTION

The illustrative embodiments recognize and take into account one or more different considerations. For example, the illustrative embodiments recognize and take into account that the amount of time needed for maintenance personnel to install software aircraft parts in an aircraft is much more time-consuming and expensive than desired.

The illustrative embodiments also recognize and take into account that having personnel from a third party providing software to an operator entering the different aircraft to perform installation of software aircraft parts increases the scheduling complexity for maintaining the aircraft. For example, maintenance personnel may travel to locations to install software aircraft parts. In other illustrative examples, the aircraft may have software aircraft parts installed only in selected locations during operation of the aircraft.

Thus, the illustrative embodiments provide a method and apparatus for installing software aircraft parts on an aircraft. In one illustrative example, a process is present for installing a software aircraft part in an aircraft. The process receives a command to install the software aircraft part. The process determines whether the software aircraft part is present in the aircraft. The process verifies with a third party that the software aircraft part is to be installed. The third party is in a location remote to the aircraft for the verification. The process installs the software aircraft part in the aircraft when the software aircraft part is present in the aircraft and the software aircraft part is verified for installation, wherein the aircraft operates with a software aircraft part installed in the aircraft.

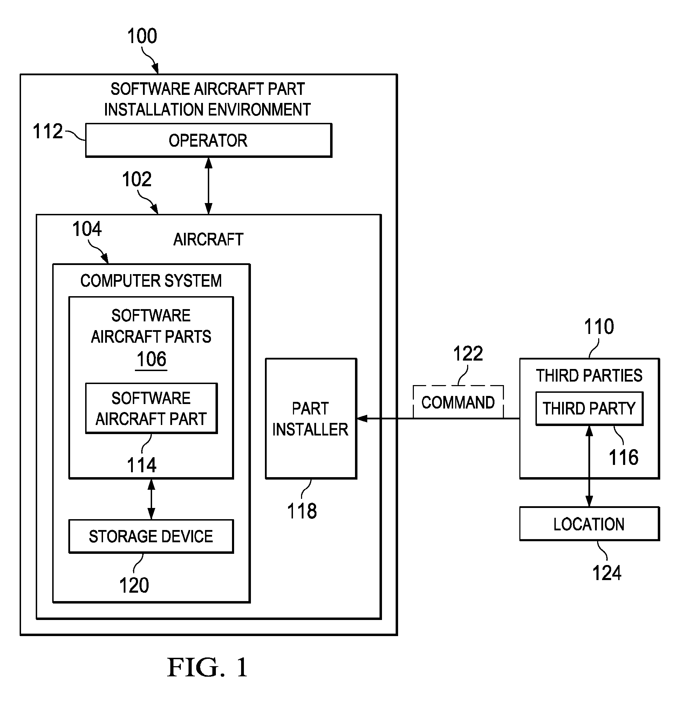

With reference now to the figures and in particular with reference to **Figure 1****,** an illustration of a block diagram of a software aircraft part installation environment is depicted in accordance with an illustrative embodiment. In this illustrative example, software aircraft part installation environment **100** includes aircraft **102.** Aircraft **102** may take different forms. For example, aircraft **102** may be a commercial airplane, a rotorcraft, a military aircraft, a helicopter, an unmanned aircraft, or some other type of aircraft.

As depicted, aircraft **102** has computer system **104** on which software aircraft parts **106** may be located. A software aircraft part may be, for example, a program, a configuration file, a database, a manual, a checklist, an application, or some other suitable type of software that may be used in aircraft **102.**

In this illustrative example, computer system **104** is one or more computers. When more than one computer is present in computer system **104,** the computers may communicate with each other using communications media such as a network. As depicted, the computers may include a flight management system, an electronic flight bag, a navigation system, an in-flight entertainment system, an environmental control system, a general purpose network file server, and other suitable types of systems in aircraft **102** that employed the computers.

The network may include at least one of wired links, optical links, wireless links, or other suitable types of links over which information may be sent. As used herein, the phrase "at least one of," when used with a list of items, means different combinations of one or more of the listed items may be used and only one of each item in the list may be needed. In other words, at least one of means any combination of items and number of items may be used from the list but not all of the items in the list are required. The item may be a particular object, thing, or a category.

For example, without limitation, "at least one of item A, item B, or item C" may include item A, item A and item B, or item B. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

In the illustrative example, software aircraft parts **106** originate from one or more of third parties **110.** As depicted, third parties **110** are entities other than operator **112** in aircraft **102.** Operator **112** may be, for example, an airline, a delivery company, a government entity, or some other entity.

For example, software aircraft part **114** in software aircraft parts **106** may be supplied by third party **116** in third parties **110.** Third party **116** may be selected from one of an aircraft manufacturer, a vendor, a distributor, a manufacturer of aircraft parts, or some other suitable entity. Operator **112** may be an airline in this illustrative example.

As depicted, part installer **118** is a component that may be located in computer system **104.** Part installer **118** installs software aircraft parts **106** in aircraft **102.** In particular, part installer **118** installs software aircraft parts **106** in computer system **104.**

Part installer **118** may be implemented in software, hardware, firmware or a combination thereof. When software is used, the operations performed by part installer **118** may be implemented in program code configured to run on hardware, such as a processor unit. When firmware is used, the operations performed by part installer **118** may be implemented in program code and data and stored in persistent memory to run on a processor unit. When hardware is employed, the hardware may include circuits that operate to perform the operations in part installer **118.**

In the illustrative examples, the hardware may take the form of a circuit system, an integrated circuit, an application specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. Additionally, the processes may be implemented in organic components integrated with inorganic components and may be comprised entirely of organic components excluding a human being. For example, the processes may be implemented as circuits in organic semiconductors.

As depicted in this illustrative example, software aircraft part **114** is located in storage device **120** in computer system **104** but not installed in computer system **104.** In other words, software aircraft part **114** has been uploaded or transferred onto computer system **104** to be installed in computer system **104.** Software aircraft part **114** may still be archived, activated, or in some other state where software aircraft part **114** is not usable in computer system **104** until software aircraft part **114** is installed.

In these illustrative examples, the installation of software aircraft part **114** is formed by part installer **118** without needing a human operator in aircraft **102** performing operations to install software aircraft part **114** in computer system **104** in aircraft **102.** As depicted, part installer **118** installs software aircraft part **114** in computer system **104** in aircraft **102** in a manner that reduces the amount of time and effort for installation as compared to currently used techniques in which a maintenance operator performs the installation in the aircraft. In this illustrative example, part installer **118** receives command **122** to install software aircraft part **114.** In this illustrative example, command **122** is received from third party **116.**

When command **122** is received, part installer **118** determines whether command **122** is authentic. In determining whether command **122** is authentic, part installer **118** determines whether command **122** was actually sent by third party **116.** The authentication may be performed using various techniques such as, for example, using a cyclic redundancy check, comparing certificates, and other suitable techniques.

When the command is determined to be authentic, part installer **118** determines whether software aircraft part **114** is present in aircraft **102.** If software aircraft part **114** is not present, then the installation is not performed. Part installer **118** verifies with third party **116** that software aircraft part **114** is to be installed when software aircraft part **114** is present in aircraft **102.** In this illustrative example, third party **116** is in location **124** remote to aircraft **102.** In other words, human operators for third party **116** are not present in aircraft **102.** The presence of human operators is not necessary for the installation of software aircraft part **114.**

Next, part installer **118** installs software aircraft part **114** in aircraft **102** when software aircraft part **114** is present in aircraft **102** and the software aircraft part is verified for installation. In this manner, aircraft **102** may operate with software aircraft part **114** installed in aircraft **102.**

With part installer **118,** the installation of software aircraft part **114** occurs without the use of human operators located in aircraft **102.** In this manner, sending maintenance personnel to each aircraft owned or operated by operator **112** is unnecessary. Through the use of part installer **118,** the installation of software aircraft part **114** in some or all of a fleet of aircraft may be performed in a less time-consuming and less expensive manner as compared to current techniques in which maintenance personnel travel to each aircraft in which a software aircraft part is to be installed.

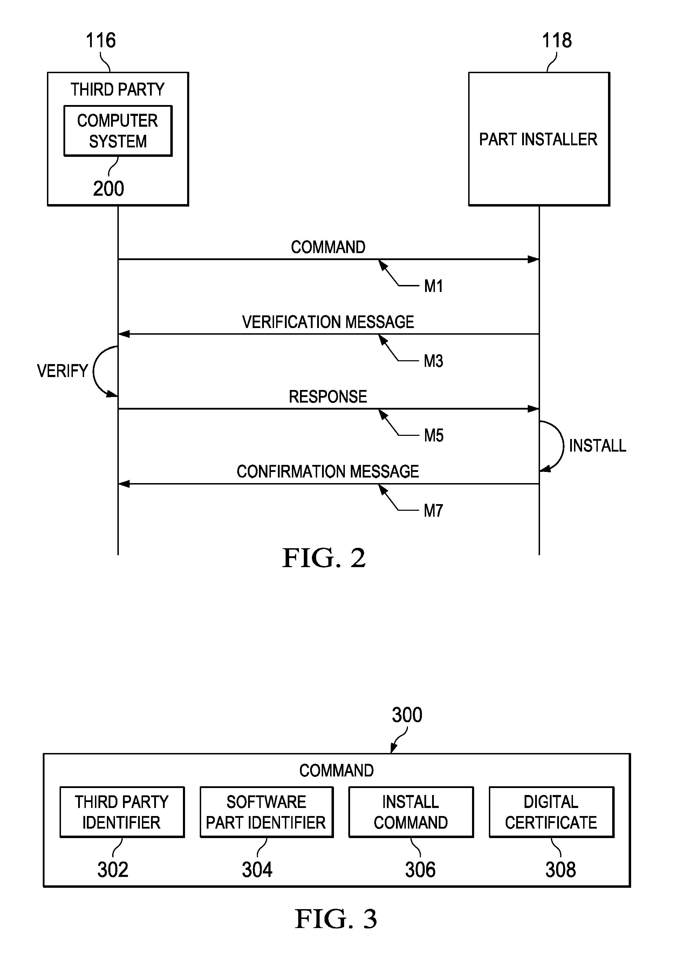

With reference now to **Figure 2****,** an illustration of message flow between a part installer and a third party for installing a software part is depicted in accordance with an illustrative embodiment. The message flow illustrated in this figure occurs between part installer **118** and third party **116.** In this example, the messages sent to and sent by third party **116** occur using computer system **200** at third party **116.** In this illustrative example, computer system **200** is one or more computers.

In this example, third party **116** sends a command to part installer **118** (message **M1**)**.** The command is information that tells part installer **118** to install software aircraft part **114** in aircraft **102.** The command in message **M1** may be, for example, command **122** in **Figure 1****.**

In response to receiving the command, part installer **118** sends a verification message to third party **116** (message **M3**). The verification message is a request to make sure software aircraft part **114** should be installed in aircraft **102.**

Third party **116** verifies whether software aircraft part **114** should be installed in aircraft **102** in response to receiving the verification message. After performing the verification, third party **116** sends a response back to part installer **118** (message **M5**). The response includes an indication as to whether software aircraft part **114** should be installed.

If the response indicates that software aircraft part **114** should be installed, part installer **118** installs software aircraft part **114** in aircraft **102.** After the installation of software aircraft part **114,** part installer **118** sends a confirmation message to third party **116** indicating that software aircraft part **114** has been installed (message **M7**). The confirmation message contains metadata about the installation of software aircraft part **114.** This metadata may be a flag or code that software aircraft part **114** has been installed or may include other information about the installation of software aircraft part **114** in addition to the flag or code.

On the other hand, if the response in message **M5** indicates that the software aircraft part should not be installed, no installation is performed. Confirmation message **M7** may be sent back with a confirmation that no installation was performed by part installer **118.**

All of the messages illustrated in **Figure 2** may be sent between part installer **118** and third party **116** in a secure manner. For example, the message may be sent using any available techniques to reduce at least one of spoofing messages, altering messages without detection, intercepting messages, or other undesired access to the messages that are sent between part installer **118** and third party **116.** For example, at least one of hypertext transfer protocol secure (HTTPS), transport layer security (TLS), secure sockets layer (SSL), a virtual private network, encryption, a digital certificate, a digital signature, a quantum key, or some other suitable mechanism may be used.

**Figures 3-7** are illustrative examples of messages that show one manner in which messages may be implemented that are sent between part installer **118** and third party **116** as part of an installation process of software aircraft part **114.** Turning first to **Figure 3****,** an illustration of a command is depicted in the form of a block diagram in accordance with an illustrative embodiment. In this example, command **300** is an example of one implementation of a command send in message m1 in **Figure 2****.**

As shown in this example, command **300** includes fields. In this illustrative example, the fields are third party identifier **302,** software part identifier **304,** install command **306,** and digital certificate **308.**

Third party identifier **302** identifies third party **116** in **Figures 1-2** as the party originating the command. In this example, third party identifier **302** may be at least one of name of the third party **116,** a number identifying third party **116,** or some other suitable identifier.

Next, software part identifier **304** indicates the software aircraft part to be installed. In the illustrative example, software part identifier **304** may be at least one of a name of software part identifier **304,** a serial number, a part number, a version identifier, or some other information that identifies software aircraft part **114.** As depicted, digital certificate **308** is used to verify that command **300** did come from third party **116.**

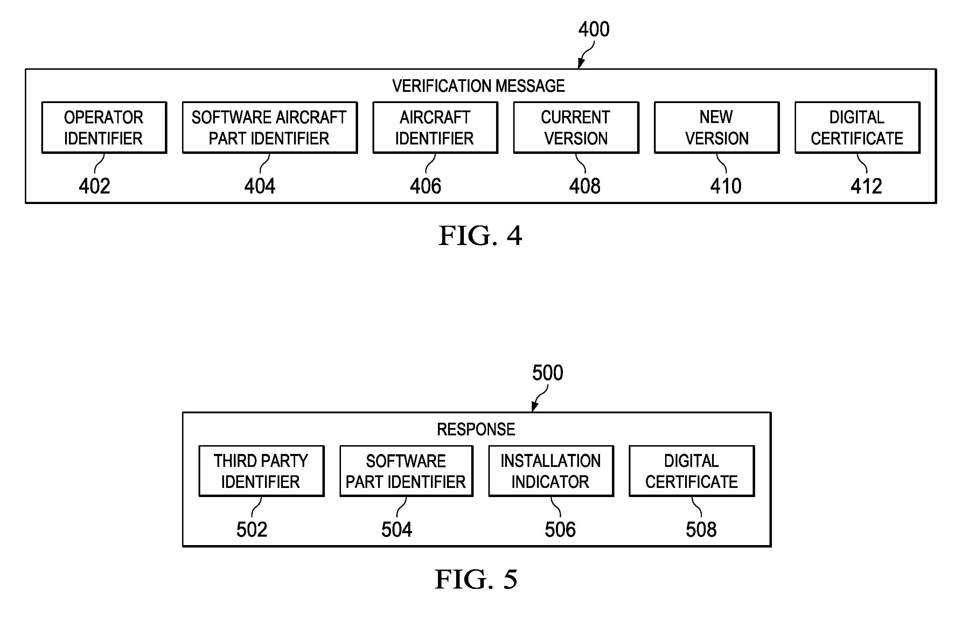

With reference now to **Figure 4****,** an illustration of a verification message is depicted in the form of a block diagram in accordance with an illustrative embodiment. Verification message **400** is an example of one implementation for the verification message in message **M3** as shown in this figure.

As depicted, verification message **400** includes a number of different fields. In this illustrative example, verification message **400** includes operator identifier **402,** software aircraft part identifier **404,** aircraft identifier **406,** current version **408,** new version **410,** and digital certificate **412.**

Operator identifier **402** identifies an operator of aircraft **102.** Operator identifier **402** may be a name of the operator, a number identifying the operator, or some other information that indicates the identification of the operator.

In the illustrative example, software aircraft part identifier **404** identifies software aircraft part **114** as the software aircraft part to be installed in aircraft **102** seen in **Figure 1****.** Aircraft identifier **406** identifies aircraft **102** in which software aircraft part **114** is to be installed. In this illustrative example, aircraft identifier **406** may be, for example, a tail number, a serial number, or some other information that identifies aircraft **102.**

Current version **408** is the current version of software aircraft part **114** that is installed in aircraft **102.** If the version of software aircraft part **114** is not already present on aircraft **102,** current version **408** may be a null value or a flag that indicates that the install adds software aircraft part **114** as a new software aircraft part rather than upgrading or changing the version of an existing software aircraft part.

New version **410** is the version of the software aircraft part **114** that is to be installed in aircraft **102.** This new version may be a later version or an earlier version of software aircraft part **114.** In some cases, an earlier version of the software aircraft part **114** may be desirable for performance reasons. Digital certificate **412** is used to verify that verification message **M3** was sent by part installer **118** in **Figure 2****.**

With reference now to **Figure 5****,** an illustration of a response is depicted in the form of a block diagram in accordance with an illustrative embodiment. In this example, response **500** is an example of one implementation of a response sent in message **M5** in **Figure 2****.**

As illustrated in the example, response **500** includes a number of fields. As depicted, response **500** includes third party identifier **502,** software part identifier **504;** installation indicator **506,** and digital certificate **508.**

In the illustrative example, third party identifier **502** identifies third party **116** as the party originating response **500.** Software part identifier **504** indicates the software aircraft part for which the verification was requested.

Installation indicator **506** indicates whether software aircraft part **114** should be installed. Installation indicator **506** may be, for example, a flag, a true or false indication, a code, or some other type of indication as to whether software aircraft part **114** should be installed. In this particular example, digital certificate **508** is used to verify whether response **500** was sent by third party **116.**

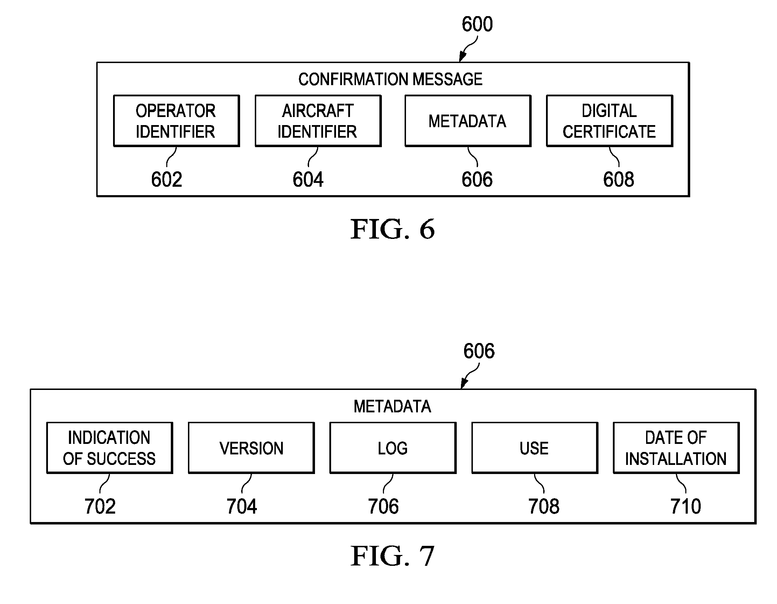

Turning next to **Figure 6****,** an illustration of a confirmation message sent by a part installer after installing a software aircraft part is depicted in the form of a block diagram in accordance with an illustrative embodiment. In this depicted example, confirmation message **600** includes a number of fields. As illustrated, confirmation message **600** includes operator identifier **602,** aircraft identifier **604,** metadata **606,** and digital certificate **608.**

Operator identifier **602** identifies the operator of aircraft **102.** As depicted, aircraft identifier **604** identifies aircraft **102** on which operations to install software aircraft part **114** was performed by part installer **118** in **Figure 1****.**

Metadata **606** is information about at least one of the operations performed by part installer **118,** software aircraft part **114,** or other suitable information. Digital certificate **608** is used to verify that confirmation message **600** was sent by part installer **118.**

Turning next to **Figure 7****,** an illustration of metadata generated from an installation of a software aircraft part is depicted in the form of a block diagram in accordance with an illustrative embodiment. An example of information in metadata **606** in **Figure 6** is shown in this figure.

As depicted, metadata **606** includes a number of different types of information. This information relates to the installation of software aircraft part **114** in the depicted example. As illustrated, metadata **606** includes at least one of indication of success **702,** version **704,** log **706,** use **708,** or date of installation **710.**

Indication of success **702** indicates whether software aircraft part **114** was installed successfully or if an error occurred while installing software aircraft part **114** in **Figure 1****.** Version **704** is the version of software aircraft part **114** that was installed during the installation process. Log **706** is a log of the installation of software aircraft part **114.** Log **706** may identity steps such as components for software aircraft part **114** that were installed, removed, or both. Log **706** also may identify the different operations performed.

Use **708** is an indication of the use of software aircraft part **114** by computer system **104** in aircraft **102** in **Figure 1****.** Using software aircraft part **114** in aircraft **102** means computer system **104** in aircraft **102** runs software aircraft part **114.**

For example, after installation of version **704** of software aircraft part **114** in aircraft **102,** use **708** may include at least one of a timestamp when version **704** of software aircraft part **114** is run by computer system **104,** an amount of time that version **704** of software aircraft part **114** has been running in computer system **104,** a number of times version **704** of software aircraft part **114** has been run by computer system **104,** a number of lines of code in software aircraft part **114** that have been run in computer system **104,** or other suitable indications of use of software aircraft part **114** in the aircraft.

Date of installation **710** identifies when software aircraft part **114** was installed. Date of installation **710** may include a month, day, year, and time for the installation for software aircraft part **114.**

The illustration of the different messages in **Figure 3-7** and the information in those messages have been described for purposes of illustrating one manner in which messages exchanged between part installer **118** and third party **116** may be implemented. These examples are not meant to limit the manner in which messages may be implemented or limit the types or number of messages that may be sent between part installer **118** and third party **116** in these illustrative examples.

The illustration of software aircraft part installation environment **100** and the different components in this environment in **Figures 1-7** are not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, one or more aircraft in addition to aircraft **102** may have software aircraft parts loaded into them using part installers located on the these additional aircraft. As another example, the different fields shown for data structures shown in **Figure 3-7** are only intended as examples and not as limitations to the manner in which the data structures may be implemented. For example, the messages may omit a digital certificate. Instead, a virtual private network or some other mechanism may be used. As another example, aircraft identifier **604** in **Figure 6** may be part of metadata **606** rather than a separate field in confirmation message **600** in **Figure 6****.**

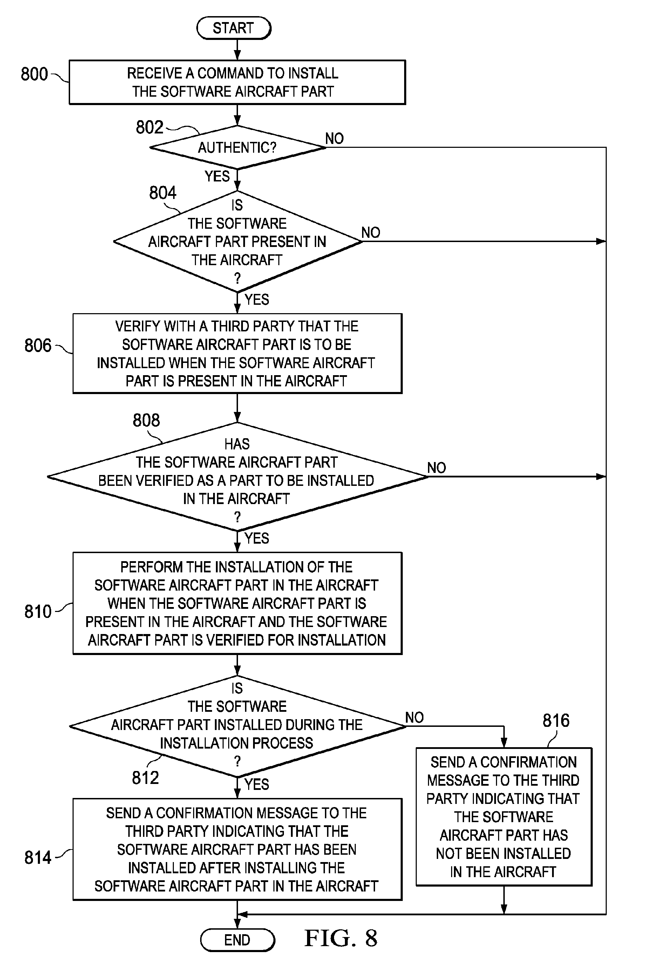

With reference next to **Figure 8****,** an illustration of a flowchart of a process for installing a software aircraft part is depicted in accordance with an illustrative embodiment. The process illustrated in **Figure 8** may be implemented in software aircraft part installation environment **100** in **Figure 1****.** In particular, the operations in **Figure 8** may be implemented in part installer **118** in **Figure 1****.**

The process begins by receiving a command to install the software aircraft part (operation **800**). The process verifies whether the command is authentic (operation **802**). The verification may be performed using a number of mechanisms. For example, a digital certificate may be checked, or some other suitable mechanism may be used. Another verification mechanism may be used that results in operation **802** transmitting a confirmation message to a trusted link or endpoint for the third party **116** to independently verify the originator of the command. If the command is not authentic, the process terminates.

Otherwise, the process then determines whether the software aircraft part is present in the aircraft (operation **804**). If the software aircraft part is not present in aircraft, the process terminates.

Otherwise, the process verifies with a third party that the software aircraft part is to be installed when the software aircraft part is present in the aircraft (operation **806**). In the illustrative example, the third party is in a location remote to the aircraft. In other words, personnel for the third party are not needed in the aircraft to perform the installation process.

The process then determines whether the software aircraft part has been verified as a part to be installed in the aircraft (operation **808**). If the software aircraft part has not been verified for installation, the process terminates.

Otherwise, the process performs the installation of the software aircraft part in the aircraft when the software aircraft part is present in the aircraft and the software aircraft part is verified for installation (operation **810**). In this illustrative example, the installation may be performed when the verification is received or some other time. For example, the process may set a schedule to install the software aircraft part and install the software aircraft part based on the schedule.

A determination is then made as to whether the software aircraft part is installed during the installation process (operation **812**). If the software aircraft part is installed, the process sends a confirmation message to the third party indicating that the software aircraft part has been installed after installing the software aircraft part in the aircraft (operation **814**), with the process terminating thereafter.

In this illustrative example, the confirmation message includes metadata generated in the aircraft that describes at least one of a version of a software aircraft part that was installed, a log of an installation of the software aircraft part, a use of software aircraft part installed in the aircraft, or other information relating to the software aircraft part.

As a result of installation, the aircraft operates with a software aircraft part installed in the aircraft. With a new software aircraft part or a new version for existing software aircraft part installed using this process, the aircraft may have a desired level of performance. This performance may be, for example, for at least one of fuel efficiency, passenger comfort, passenger experience, aircraft health monitoring, or other desired types of performance.

With reference again to operation **812,** if the software aircraft part was not installed during the installation process, the process sends a confirmation message to the third party indicating that the software aircraft part has not been installed in the aircraft (operation **816**), with the process terminating thereafter.

In this case, the confirmation message indicates that installation process was performed, but the decision was made not to install the software aircraft part during the process. For example, the software aircraft part may have been corrupted, or otherwise unusable, for installation in the aircraft. In another example, the software aircraft part may be the incorrect version for installation.

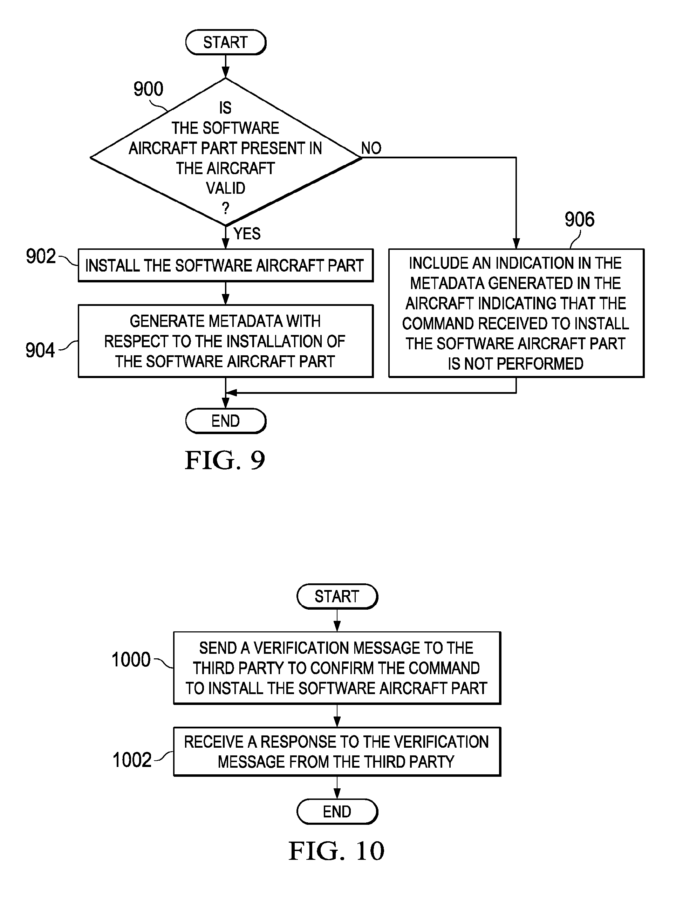

Turning next to **Figure 9****,** an illustration of a flowchart of a process for installing a software aircraft part is depicted in accordance with an illustrative embodiment. The process illustrated in **Figure 9** is an example of an implementation of operation **810** in **Figure 1****.**

The process begins by determining whether the software aircraft part present in the aircraft is valid (operation **900**). The determination as to whether the software aircraft present is valid may be based on at least one of a cyclic redundancy check value for the software aircraft part, a certificate of authentication for the software aircraft part, a compatibility of the version of the software aircraft part with other aircraft parts in the aircraft, an amount of time the software aircraft part has been in the aircraft, or some other suitable factor.

If the software aircraft part is identified as being valid, the process installs the software aircraft part (operation **902**). The process then generates metadata with respect to the installation of the software aircraft part (operation **904**), with the process terminating thereafter.

With reference again to operation **900,** if the software aircraft part has been identified as invalid, an indication is included in the metadata generated in the aircraft indicating that the command received to install the software aircraft part is not performed (operation **906**), with the process terminating thereafter. In other words, the operation for installing the software aircraft part may result in not installing the software aircraft part. The termination of this process results in other operations in **Figure 8** being performed.

Turning now to **Figure 10****,** an illustration of a flowchart of a verification process is depicted in accordance with an illustrative embodiment. Operations illustrated in **Figure 10** are example of an implementation for operation **808** in **Figure 8****.**

The process begins by sending a verification message to the third party to confirm the command to install the software aircraft part (operation **1000**). In this illustrative example, the verification message includes an identification of a current version of the software aircraft part installed on the aircraft and an identification of a new version of the software aircraft part to be installed on the aircraft. Of course, other information may be present in the verification message.

The process then receives a response to the verification message from the third party (operation **1002**), with the process terminating thereafter. The response indicates whether the command to install the software aircraft part should be followed.

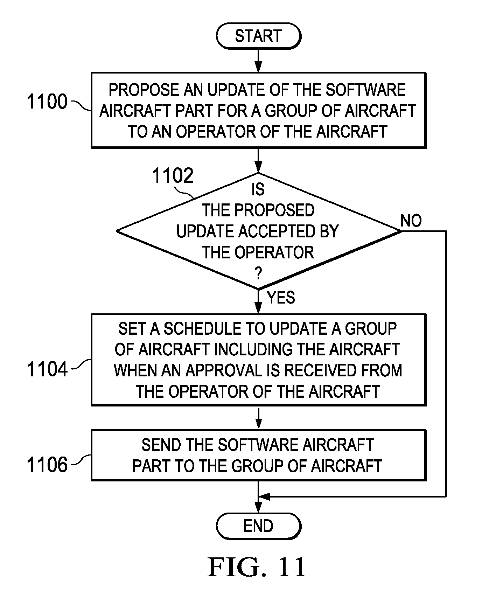

Turning next to **Figure 11****,** an illustration of a flowchart of a process for proposing installation of a software aircraft part is depicted in accordance with an illustrative embodiment. The process illustrated in **Figure 11** may be implemented in third party **116** in **Figure 1****.**

The process begins by proposing an update of the software aircraft part for a group of aircraft to an operator of the aircraft (operation **1100**). In the illustrative example, a "group of" as used herein with reference to items means one or more items. For example, a group of aircraft is one or more aircraft. The group of aircraft may be all of the aircraft for the operator. In other illustrative examples, the group of aircraft may be a subset of the aircraft that may be used for quality control or testing purposes.

A determination is made as to whether the proposed update is accepted by the operator (operation **1102**). If the proposed update is not accepted, the process terminates. Otherwise, the process sets a schedule to update a group of aircraft including the aircraft when an approval is received from the operator of the aircraft (operation **1104**).

The process then sends the software aircraft part to the group of aircraft (operation **1106**), with the process terminating thereafter. In these illustrative examples, operation **1106** may be an electronic distribution in which the software aircraft part is sent over a communications link from a third party to each of the aircraft. In other illustrative examples, the software aircraft part may be loaded onto the aircraft through the data processing system carried by a maintenance person. This type of loading of a software aircraft part may be performed when other normal maintenance occurs.

As a result, the software aircraft part is ready for installation based on a desired schedule of when the software aircraft part should be installed. For example, if the software aircraft part is for a new in-flight entertainment system, the installation of the software aircraft part may not occur until the in-flight entertainment system is installed in the aircraft.

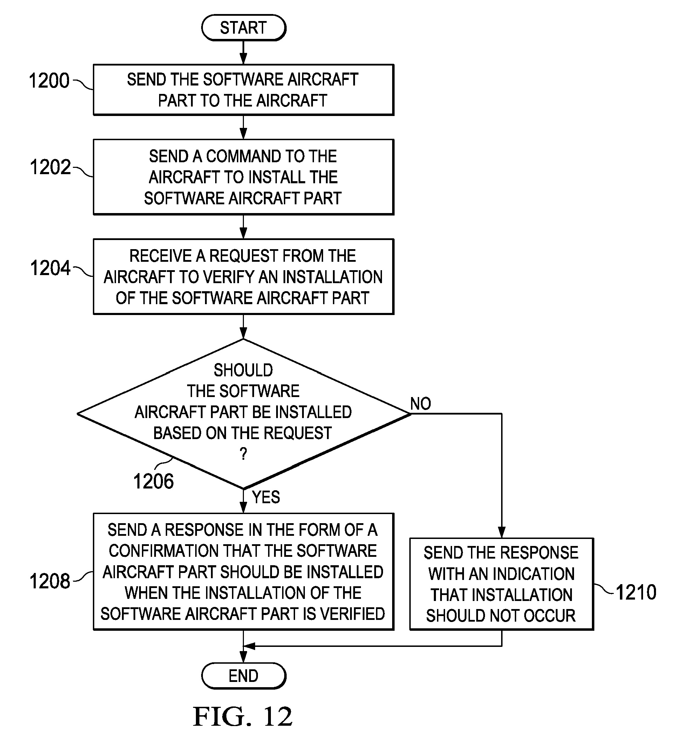

With reference next to **Figure 12****,** an illustration of a flowchart of a process for installing a software aircraft part is depicted in accordance with an illustrative embodiment. The process illustrated in **Figure 12** may be implemented in third party **116** in **Figure 1****.** In particular, the process may be implemented using computer system **200** in **Figure 2** for third party **116.** For example, the operations in the process may be performed by a program running in computer system **200** in **Figure 2****.**

The process begins by sending the software aircraft part to the aircraft (operation **1200**). The process then sends a command to the aircraft to install the software aircraft part (operation **1202).**

The process receives a request from the aircraft to verify an installation of the software aircraft part (operation **1204**). In this example, the request takes the form of a verification message received from the part installer in the aircraft in which the software aircraft part is to be installed.

The process then verifies whether the software aircraft part should be installed based on the request (operation **1206**). This verification may be performed in computer system **200** by a software process, a human operator, or some combination thereof. In other words, the human operator may verify whether the software aircraft part should be installed. This decision, however, may be made at another location other than the aircraft. As a result, the human operator may perform verifications for many aircraft without traveling to the aircraft.

If the verification performed in operation **1206** indicates the software aircraft part is to be installed, a response is sent in the form of a confirmation that the software aircraft part should be installed when the installation of the software aircraft part is verified (operation **1208**), with the process terminating thereafter. As result, the software aircraft part is installed on the aircraft when the confirmation is received by the aircraft. With reference again to operation **1206,** if the verification indicates that the software aircraft part should not be installed, the response is sent with an indication that installation should not occur (operation **1210**), with the process terminating thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

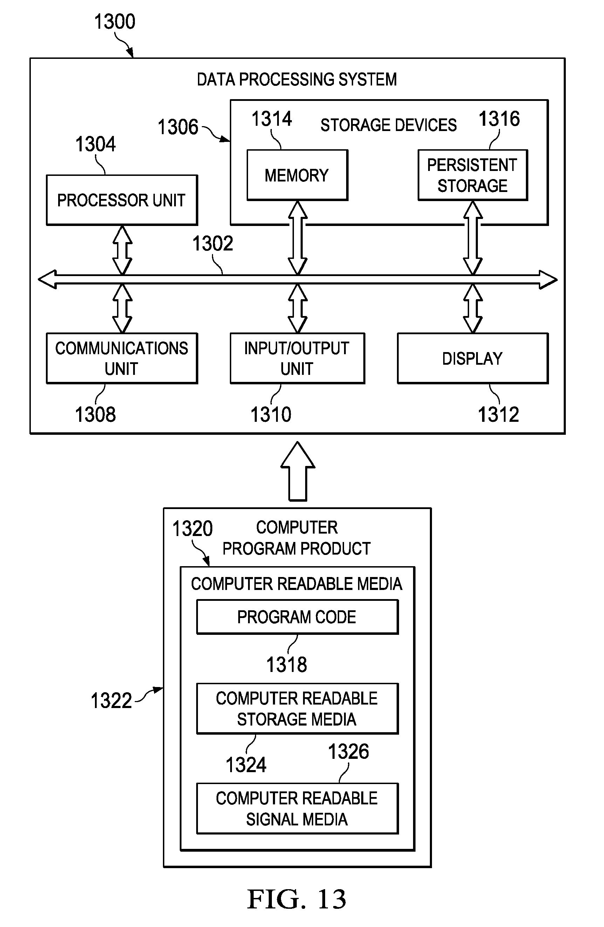

Turning now to **Figure 13****,** an illustration of a data processing system in the form of a block diagram is depicted in accordance with an illustrative embodiment. Data processing system **1300** may be used to implement one or more computers or other data processing devices in computer system **104** in **Figure 1****.** Additionally, data processing system **1300** may be used to implement computer system **200** and third party **116** as illustrated in **Figure 2****.**

As depicted, data processing system **1300** includes communications framework **1302,** which provides communications between processor unit **1304,** storage devices **1306,** communications unit **1308,** input/output unit **1310,** and display **1312.** In some cases, communications framework **1302** may be implemented as a bus system.

Processor unit **1304** is configured to execute instructions for software to perform a number of operations. Processor unit **1304** may comprise a number of processors, a multi-processor core, and/or some other type of processor, depending on the implementation. In some cases, processor unit **1304** may take the form of a hardware unit, such as a circuit system, an application specific integrated circuit (ASIC), a programmable logic device, or some other suitable type of hardware unit.

Instructions for the operating system, applications, and/or programs run by processor unit **1304** may be located in storage devices **1306.** Storage devices **1306** may be in communication with processor unit **1304** through communications framework **1302.** As used herein, a storage device, also referred to as a computer readable storage device, is any piece of hardware capable of storing information on a temporary and/or permanent basis. This information may include, but is not limited to, data, program code, and other information.

Memory **1314 and** persistent storage **1316** are examples of storage devices **1306.** Memory **1314** may take the form of, for example, a random access memory or some type of volatile or nonvolatile storage device. Persistent storage **1316** may comprise any number of components or devices. For example, persistent storage **1316** may comprise a hard drive, a flash memory, a rewritable optical disk, a rewritable magnetic tape, or some combination of the above. The media used by persistent storage **1316** may or may not be removable.

Communications unit **1308** allows data processing system **1300** to communicate with other data processing systems and devices. Communications unit **1308** may provide communications using physical communications links, wireless communications links, or some combination thereof.

Input/output unit **1310** allows input to be received from and output to be sent to other devices connected to data processing system **1300.** For example, input/output unit **1310** may allow user input to be received through a keyboard, a mouse, and/or some other type of input device. As another example, input/output unit **1310** may allow output to be sent to a printer connected to data processing system **1300.**

Display **1312** is configured to display information to a user. Display **1312** may comprise, for example, without limitation, a monitor, a touch screen, a laser display, a holographic display, a virtual display device, or some other type of display device.

In this illustrative example, the processes of the different illustrative embodiments may be performed by processor unit **1304** using computer-implemented instructions. These instructions may be referred to as program code, computer usable program code, or computer readable program code and may be read and executed by one or more processors in processor unit **1304.**

In these examples, program code **1318** is located in a functional form on computer readable media **1320,** which is selectively removable, and may be loaded onto or transferred to data processing system **1300** for execution by processor unit **1304.** Program code **1318** and computer readable media **1320** together form computer program product **1322.** In this illustrative example, computer readable media **1320** may be computer readable storage media **1324** or computer readable signal media **1326.**

Computer readable storage media **1324** is a physical or tangible storage device used to store program code **1318** rather than a medium that propagates or transmits program code **1318.** Computer readable storage media **1324** may be, for example, without limitation, an optical or magnetic disk or a persistent storage device that is connected to data processing system **1300.**

Alternatively, program code **1318** may be transferred to data processing system **1300** using computer readable signal media **1326.** Computer readable signal media **1326** may be, for example, a propagated data signal containing program code **1318.** This data signal may be using at least one of an electromagnetic signal, an optical signal, or some other type of signal that can be transmitted over physical communications links, wireless communications links, or both.

The illustration of data processing system **1300** in **Figure 13** is not meant to provide architectural limitations to the manner in which the illustrative embodiments may be implemented. The different illustrative embodiments may be implemented in a data processing system that includes components in addition to or in place of those illustrated for data processing system **1300.** Further, components shown in **Figure 13** may be varied from the illustrative examples shown.

Thus, one or more illustrative examples provide a method and apparatus for installing software aircraft parts in an aircraft. The process allows for the installation of software aircraft parts without a human operator traveling to and being present in each aircraft in which the software aircraft part is to be installed.

This solution in the illustrative examples is scalable across an entire fleet of aircraft. Further, with the number of software aircraft parts and periodic updates of the software aircraft parts, the amount of time and effort needed to maintain software aircraft parts for customers such as airlines may be reduced. Further, with the reduction in time needed to install and maintain software aircraft parts, the availability of aircraft carrying passengers, cargo, or some combination thereof may be increased.

In this manner, a third party may more efficiently provide services to a customer operating an aircraft. Further, updates to software aircraft parts and new software aircraft parts that may be desired for an aircraft may be deployed much more quickly as compared to currently used processes in which maintenance personnel carry aircraft parts to the aircraft, or are present in the aircraft to perform installation of the aircraft part.

Further, the disclosure comprises embodiments according to the following clauses:
Clause 1. A method for installing a software aircraft part in an aircraft, the method comprising: receiving a command to install the software aircraft part; determining whether the software aircraft part is present in the aircraft; verifying with a third party that the software aircraft part is to be installed when the software aircraft part is present in the aircraft, wherein the third party is in a location remote to the aircraft; and performing an installation of the software aircraft part in the aircraft when the software aircraft part is present in the aircraft and the software aircraft part is verified for the installation, wherein the aircraft operates with the software aircraft part installed in the aircraft.
Clause 2. The method of clause 1 further comprising: verifying whether the command is authentic.
Clause 3. The method of clause 1, wherein the verifying step comprises: sending a verification message to the third party to confirm the command to install the software aircraft part; and receiving a response to the verification message from the third party, wherein the response indicates whether the command to install the software aircraft part should be followed.
Clause 4. The method of clause 3, wherein the verification message includes an identification of a current version of the software aircraft part installed on the aircraft and an identification of a new version of the software aircraft part to be installed on the aircraft.
Clause 5. The method of clause 1 further comprising: sending a confirmation message to the third party indicating that the software aircraft part has been installed after installing the software aircraft part in the aircraft.
Clause 6. The method of clause 5, wherein the confirmation message includes metadata generated in the aircraft that describes at least one of a version of the software aircraft part that was installed, a log of the installation of the software aircraft part, and a use of the software aircraft part installed in the aircraft.
Clause 7. The method of clause 1, wherein the installing step comprises: setting a schedule to install the software aircraft part; and installing the software aircraft part based on the schedule.
Clause 8. The method of clause 1 further comprising: proposing an update of the software aircraft part to an operator of the aircraft; and setting a schedule to update a group of aircraft including the aircraft when an approval is received from the operator of the aircraft.
Clause 9. The method of clause 1, wherein the installing step comprises: determining whether the software aircraft part present in the aircraft is valid based on at least one of a cyclic redundancy check value for the software aircraft part, a certificate of authentication for the software aircraft part, a compatibility of a version of the software aircraft part with other aircraft parts in the aircraft, or an amount of time the software aircraft part has been in the aircraft; and installing the software aircraft part when the software aircraft part is identified as valid.
Clause 10. The method of clause 9 further comprising: adding an indication to metadata generated in the aircraft indicating that the command received to install the software aircraft part in the aircraft is not performed when the software aircraft part has been identified as invalid.
Clause 11. A method for installing a software aircraft part in an aircraft, the method comprising: sending the software aircraft part to the aircraft; sending a command to the aircraft to install the software aircraft part; receiving a request from the aircraft to verify an installation of the software aircraft part; determining whether the software aircraft part should be installed based on the request; and sending a confirmation that the software aircraft part should be installed when the installation of the software aircraft part is verified, wherein the software aircraft part is installed on the aircraft when the confirmation is received by the aircraft.
Clause 12. The method of clause 11, wherein the determining step is performed by an operator for a third party selected from at least one of a program running on a computer system or a human operator.
Clause 13. An apparatus comprising: a part installer that receives a command to install a software aircraft part; determines whether the software aircraft part is present in an aircraft; verifies with a third party that the software aircraft part is to be installed when the software aircraft part is present in the aircraft in which the third party is in a location remote to the aircraft; and installs the software aircraft part in the aircraft when the software aircraft part is present in the aircraft and the software aircraft part is verified for installation, wherein the aircraft operates with the software aircraft part installed in the aircraft.
Clause 14. The apparatus of clause 13 further comprising: a computer system in the aircraft, wherein the part installer is located in the computer system.
Clause 15. The apparatus of clause 13 further comprising: verifying whether the command is authentic.
Clause 16. The apparatus of clause 13, wherein in verifying with the third party that the software aircraft part is to be installed, the part installer sends a message to the third party to confirm the command to install the software aircraft part; and receives a response to the message from the third party, wherein the response indicates whether the command to install the software aircraft part should be followed.
Clause 17. The apparatus of clause 16, wherein the message includes an identification of a current version of the software aircraft part installed on the aircraft and an identification of a new version of the software aircraft part to be installed on the aircraft.
Clause 18. The apparatus of clause 17, wherein the message includes metadata generated in the aircraft that describes at least one of a version of the software aircraft part that was installed, a log of the installation of the software aircraft part, and a use of the software aircraft part installed in the aircraft.
Clause 19. The apparatus of clause 13, wherein the part installer sends a message to the third party indicating that the software aircraft part has been installed after installing the software aircraft part in the aircraft.
Clause 20. The apparatus of clause 13, wherein the part installer installs the software aircraft part in the aircraft when the software aircraft part is present in the aircraft and the software aircraft part is verified for installation, the part installer sets a schedule to install the software aircraft part and installs the software aircraft part based on the schedule.

The description of the different illustrative embodiments has been presented for purposes of illustration and description, and is not intended to be exhaustive or limited to the embodiments in the form disclosed. Many modifications and variations will be apparent to those of ordinary skill in the art. For example, although the different illustrative examples have been described with respect to a third party, these processes also may be implemented by an operator of the aircraft. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for installing a software aircraft part in an aircraft, the method comprising:
receiving (800) a command to install the software aircraft part;
determining (804) whether the software aircraft part is present in the aircraft;
verifying (806) with a third party that the software aircraft part is to be installed when the software aircraft part is present in the aircraft, wherein the third party is in a location remote to the aircraft; and
performing (810) an installation of the software aircraft part in the aircraft when the software aircraft part is present in the aircraft and the software aircraft part is verified for the installation, wherein the aircraft operates with the software aircraft part installed in the aircraft.

2. The method of claim 1 further comprising:
verifying (802) whether the command is authentic.

3. The method of claim 1, wherein the verifying step comprises:
sending (1000) a verification message to the third party to confirm the command to install the software aircraft part; and
receiving (1002) a response to the verification message from the third party, wherein the response indicates whether the command to install the software aircraft part should be followed.

4. The method of claim 3, wherein the verification message (400) includes an identification of a current version (408) of the software aircraft part installed on the aircraft and an identification of a new version (410) of the software aircraft part to be installed on the aircraft.

5. The method of claim 1 further comprising:
sending (814) a confirmation message to the third party indicating that the software aircraft part has been installed after installing the software aircraft part in the aircraft.

6. The method of claim 5, wherein the confirmation message includes metadata (606) generated in the aircraft that describes at least one of a version (704) of the software aircraft part that was installed, a log (706) of the installation of the software aircraft part, and a use (708) of the software aircraft part installed in the aircraft.

7. The method of claim 1, wherein the installing step comprises:
setting (1104)a schedule to install the software aircraft part; and
installing (812) the software aircraft part based on the schedule.

8. The method of claim 1 further comprising:
proposing (1100) an update of the software aircraft part to an operator of the aircraft; and
setting (1104) a schedule to update a group of aircraft including the aircraft when an approval is received from the operator of the aircraft.

9. The method of claim 1, wherein the installing step comprises:
determining (808) whether the software aircraft part present in the aircraft is valid based on at least one of a cyclic redundancy check value for the software aircraft part, a certificate of authentication for the software aircraft part, a compatibility of a version of the software aircraft part with other aircraft parts in the aircraft, or an amount of time the software aircraft part has been in the aircraft; and
installing (810) the software aircraft part when the software aircraft part is identified as valid.

10. The method of claim 9 further comprising:
adding (906) an indication to metadata generated in the aircraft indicating that the command received to install the software aircraft part in the aircraft is not performed when the software aircraft part has been identified as invalid.

11. An apparatus comprising:
a part installer (118) that receives (800) a command to install a software aircraft part; determines (804) whether the software aircraft part is present in an aircraft (102); verifies (806) with a third party (116) that the software aircraft part is to be installed when the software aircraft part is present in the aircraft in which the third party is in a location remote to the aircraft; and installs (810) the software aircraft part in the aircraft when the software aircraft part is present in the aircraft and the software aircraft part is verified for installation, wherein the aircraft operates with the software aircraft part installed in the aircraft.

12. The apparatus of claim 11 further comprising:
a computer system (104) in the aircraft, wherein the part installer is located in the computer system.

13. The apparatus of claim 11 further comprising:
verifying (802) whether the command is authentic.
